(19) **Europäisches Patentamt / European Patent Office / Office européen des brevets**

(11) **EP 1 722 953 B1**

(12) **EUROPEAN PATENT SPECIFICATION**

(45) Date of publication and mention
of the grant of the patent:
**02.07.2008 Bulletin 2008/27**

(21) Application number: **05749985.7**

(22) Date of filing: **02.03.2005**

(51) Int Cl.:
**B29C 41/04** *(2006.01)*    **B29C 41/52** *(2006.01)*

(86) International application number:
**PCT/EP2005/050908**

(87) International publication number:
**WO 2005/084913 (15.09.2005 Gazette 2005/37)**

(54) **POWDER CHARACTERISATION**

PULVERCHARAKTERISIERUNG

CARACTERISATION DE POUDRE

(84) Designated Contracting States:
**AT BE BG CH CY CZ DE DK EE ES FI FR GB GR HU IE IS IT LI LT LU MC NL PL PT RO SE SI SK TR**

(30) Priority: **10.03.2004 EP 04100976**

(43) Date of publication of application:
**22.11.2006 Bulletin 2006/47**

(73) Proprietor: **TOTAL PETROCHEMICALS RESEARCH FELUY**
**7181 Seneffe (Feluy) (BE)**

(72) Inventors:
• **MAZIERS, Eric**
**B - 7180 Seneffe (BE)**
• **DEWITTE, Damien**
**B-4000 Liège (BE)**

(74) Representative: **Leyder, Francis**
**Total Petrochemicals Research Feluy**
**Département Brevets**
**Zone Industrielle C**
**7181 Seneffe (Feluy) (BE)**

(56) References cited:
US-A- 3 969 475    US-A- 5 830 392
US-A- 5 868 979    US-A1- 2001 025 092
US-A1- 2003 211 188    US-B1- 6 362 270

• LIU S-J ET AL: "ROTATIONAL MOULDING OF EXPANDED POLYETHYLENE BY PELLETS" CELLULAR POLYMERS, RAPRA TECHNOLOGY LTD. SHAWBURY, SHREWSBURY, GB, vol. 19, no. 4, 2000, pages 257-270, XP001078159 ISSN: 0262-4893

**Description**

This invention relates to the use of a digital camera to characterise, in one step, several melting characteristics of thermoplastic powders that are useful in the field of rotational moulding or other powder application processes .

In the past, several methods have been developed, each dedicated to the analysis of one of the many powder properties.

Sintering or coalescence is measured according to a method developed at Mac Master University and described for example in Bellehumeu r et al. (C.T. Bellehumeur, M.K. Bisaria, and J. Vlachopoulos, in Polymer engineering and Science, 36, 2198, 1996.) Experiments were conducted on pairs of particles inside a hot stage microscopy setup with the objective to study the coalescence. These experiments led to the conclusion that the geometry of the particles did not influence the sintering rate. It was found that the sintering rate increased when the viscosity decreased, this effect however becoming less important as the particle size decreased.

Bubble formation mechanism in rotational moulding has also been studied at McMaster University and is described in Kontopoulo et al. (M. Kontopoulo, E. Takacs, and J. Vlachopoulos, in Rotation, 28, January 2000.). In rotational moulding, the polymer tends to melt freely because no external forces are applied. Air pockets or bubbles are trapped during melting, thus delaying the formation of a homogeneous melt and also affecting the mechanical and aesthetic properties of the finished product. It is thus important to understand the factors influencing the formation and evolution of these bubbles. The study was conducted with an optical microscope on linear low density polyethylene (LLDPE) resins having different melt flow indices. It was observed that high vis cosity is associated with a long time for the particles to coalesce. It was further observed that fast coalescence rate is associated to the formation of few bubbles.

The polymers that can be used in the field of rotational moulding comprise LLDPE, high density polyethylene (HDPE) random copolymer of propylene, block copolymer of propylene and polyamide (PA), polyvinylidene fluoride (PVDF), polyvinyl chloride (PVC), acrylobutadiene styrene (ABS). As these resins have very different properties, there is a need to develop a method that can quickly and accurately determine the best operational conditions.

It is an aim of the present invention to provide a method as according to claim 1 for obtaining instantaneous information in two or three dimensions on the geometry of the starting grains or pellets.

It is also an aim of the present invention to develop a method to characterise the melting properties and the coalescence process of thermoplastic powders.

It is another aim of the present invention to develop a method to characterise the densification process of molten resins.

It is yet another aim of the present invention to characterise the surface characteristics of rotomoulded articles.

It is also an aim of the present invention to provide instantaneous information on the crystallisation process.

It is yet a further aim of the present invention to correct in real time the rotational moulding parameters.

It is also aim of the present invention to transmit the information collected inside the rotomoulding cavity with the help of an endoscope.

US-A-6 362270 discloses a method of measuring the sintering time ts of rotational moulding of thermoplastic compositions by monitoring the rate of neck growth in formation of a homogeneous melts from the coalescence of powder particles. The overall cycle time in rotational moulding depending not only of the rate of oven heating but also on the rate of the sintering of the polymers. In sintering experiments, polymer cylinders with point contact between them were positioned at the center of a small glass cup which was placed in the center of a heat chamber which was temperature controlled by a thermocouple sitting in the wall of the heat chamber - a rotational moulding temperature profile was simulated by using non-isothermal conditions.

The chamber had glass windows on top and bottom for inspection for (video) taping of the process via an optical microscope equipped with a video camera. The camera was connected to a Video Cassette Recorder & TV which were connected in turn to a PC with a frame grabber board where images were stored as files. After the completion of the sintering process (approximately 400 sec), the taped images were sampled at intervals of 15 sec in the initial stages and less frequently in the advanced stages.

From the images, the neck growth between the two particles and the particle radius was measured by using an image analyzer software program called SigmaScan(TM) Pro (Jandel Scientific Software, 1992) - the neck diameter was measured directly, while the particle diameter was calculated from the measurement of the surface area of the particles. The sintering time ts (time required for the 99% completion of the neck growth) was calculated based on the empirical model using the measured time values and the corresponding measurements of the neck radius between the particles and the particle radius.

It is another aim of the present invention to study the foaming kinetics of polymer powders or the cross -linking kinetics of polymer powders.

It is yet another aim of the present invention to characterise and control the granulometry of powders and micropellets or pellets.

Accordingly, the present invention discloses the use of a charge -coupled device (CCD) camera to characterise in a single step the properties of thermoplastic powders during a rotomoulding cycle or during sintering and den sification simulations according to claim 6.

The properties of thermoplastic powders are measured during a rotomoulding cycle or during a rotomoulding simulation, starting from the powder at room temperature, increasing the temperature to a temperature larger than the fusion temperature in order to completely melt the powder, followed by reducing the temperature to crystallise the material and further reducing the temperature down to room temperature (about 25 °C). These properties are:

- geometry of the grains or of the pellets ;
- fusion temperature;
- sintering or coalescence of powder;
- densification or bubble removal of molten material;
- crystallisation temperature;
- release from the mould.

The thickness of the bed to be analysed is not particularly limited: it may vary from 0.1 up to 30 mm.

The analysis can be carried out either on the surface of the material or laterally depending upon the type of experiment and of the heating equipment.

The resins used in rotational moulding are typically in powder form wherein the average grain size is of from 10 to 2000 $\mu$m, preferably of from 100 to 800 $\mu$ and more preferably of from 300 to 500 $\mu$m. A broad grain size distribution is preferably targeted. The grinding conditions depend upon the nature of the resin: for example, linear low density polyethylene resin is ground at a temperature of from 40 to 80°C, whereas polypropylene and polyamide resins undergo cryogenic grinding. The term "cryogenic" implies that the temperature is below -200 °C. Alternatively, the resin can be prepared under the form of micropellets with the advantages of a good flowability and a narrow particle size distribution.

**List of Figures.**

Figure 1 represents the temperature of air inside the mould expressed in degrees centigrade as a function of time expressed in mi nutes for a complete cycle in rotational moulding applications.

Figure 2 represents the evolution of coalescence, expressed by the ratio y/r, as a function of time expressed in seconds, for different types of resins.

Figure 3 is a picture of the coalescence process.

Figure 4 represents the sintering characterisation process. The upper graph is the sample temperature expressed in degrees centigrade as a function of time expressed in minutes. The lower graph represents the derivative of temperature with respect to time expressed in degrees centigrade per minutes as a function of time expressed in minutes.

Figure 5 represents the evolution of coalescence, expressed by the ratio y/r, as a function of time expressed in seconds, for linear low density polyethylenes having different melt indices.

Figure 6 represents the sintering time expressed in minutes for micropellets and for powders for two identical polyethylene resins prepared with ethylene -bis-tetrahydroindenyl zirconium dichloride having a melt flow index MI2 of 4.09 dg/min and a density of 0.940 g/cm$^3$.

Figure 7 represents the densification expressed in mm$^{-2}$ by the number of bubbles per mm$^2$ Na, as a function of temperature expressed in degrees centigrade for the same polyethylene resin as that of Figu re 6.

Figure 8 represents the camera set -up that was used to simulate a rotomoulding cycle.

Figure 9 represents the camera set -up that was used to study the bubble content in rotomoulded parts.

Figure 10 represents the camera set -up that was used to co ntrol the granulometry.

Figure 11 represents a sequence of photographs showing the coalescence process.

Figure 12 represents a sequence of photographs showing the bubble removal process.

Figure 13 represents a set-up for a grinding application.

The melt flow index M12 is measured following the method of standard test ASTM D 1238 under a load of 2.16 kg and at a temperature of 190 °C.

Rotational moulding comprises three main steps, each of which having an impact on the cycle time. These steps comprise :

- sintering or coalescence;
- densification or bubble removal;
- crystallisation.

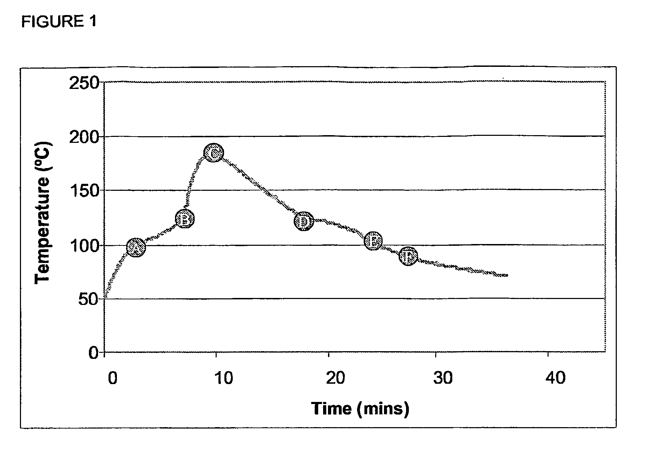

This can be seen in Figure 1 that represents the temperature expressed in degrees centigrade as a function of time expressed in minutes during a rotomoulding cycle. The first in flexion in the curve noted as point A marks the beginning of the sintering or coalescence of the powder. Sintering in the present application represents the coalescence of the powder grains or of the micropellets. The next inflexion in the curve noted as point B marks the beginning of the densification process of the molten polymer. Densification in the present application means bubbles removal. Sintering and densification are considered throughout this application as two distinct processes: they vary independently with the rotomoulding parameters and with the resin's properties.

Point C on the curve represents the Peak Internal Air Temperature (PIAT), followed by point D that marks the beginning of the crystallisation process. Point E is associated with th e time at which the rotomoulded article is completely solidified and starts receding from the walls of the mould. Point F marks the opening of the mould.

The various steps in the rotomoulding process are influenced by "internal" parameters such as the nature of the polymers, their viscosity and their rheological properties and by "external" parameters such as the PIAT, or the oven temperature, or the mould type, or the cooling rate.

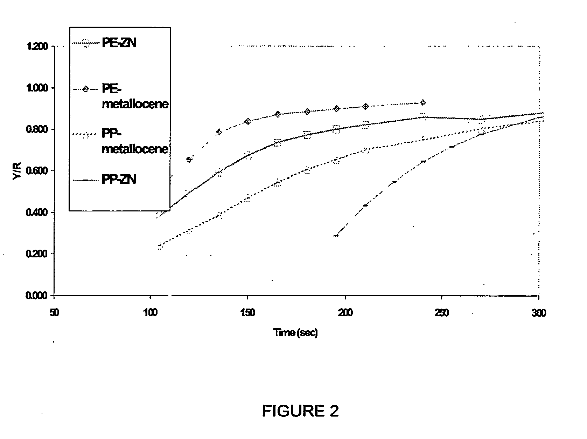

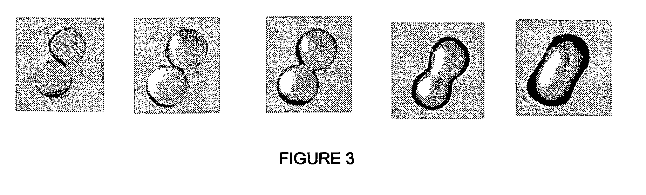

The sintering rate is a function of the choice of resin as can be seen in figure 2 representing the ratio y/r as a function of time for polypropylene, linear low density polyethylene and polyamide. The ratio y/r can best be described and understood from figure 3 representing the coalescence process of two grains. r represents the radius of the individual grains and y is a measure of the contact between the grains. When the grain just touch, y is equal to zero and it progressively increases as the grains coalesce to be equal to r when coalescence is complete.

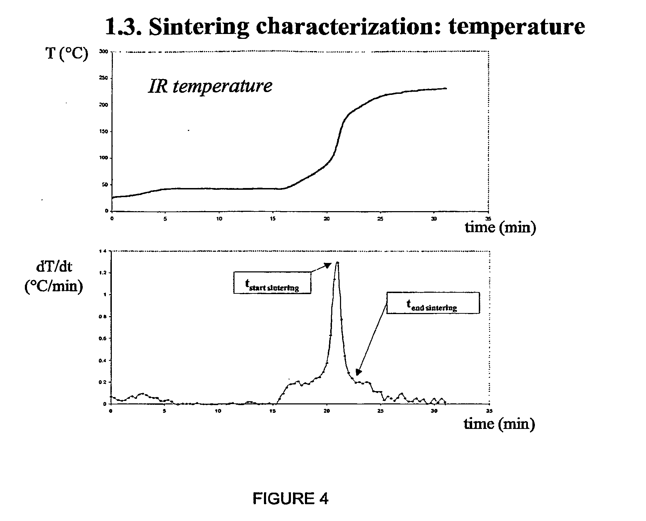

The sintering process has been characterised completely by the temperature curve as a function of time and by the first derivative of temperature with respect to time as a function of time as represented on Figure 4. The time t start sintering where the temperature derivative reaches a maximum is the main coalescence point, and the subsequent time $t_{end\ sintering}$ where it reaches a plateau is the final coalescence point.

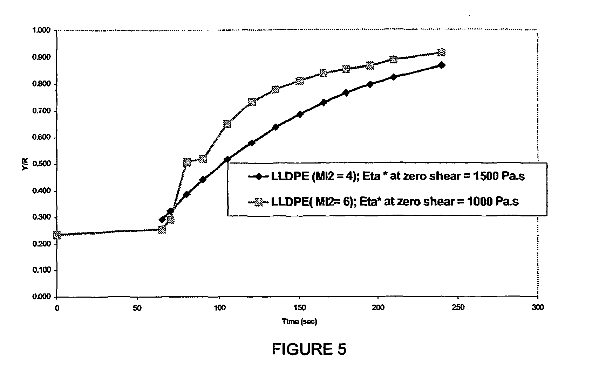

The sintering rate is also a function of the resin's viscosity as can be seen in figure 5 representing the sintering rate expressed by y/r as a function of time expressed in seconds for two linear low density polyethylenes having respectively a melt index M12 of 4 dg/min and of 6 dg/min.

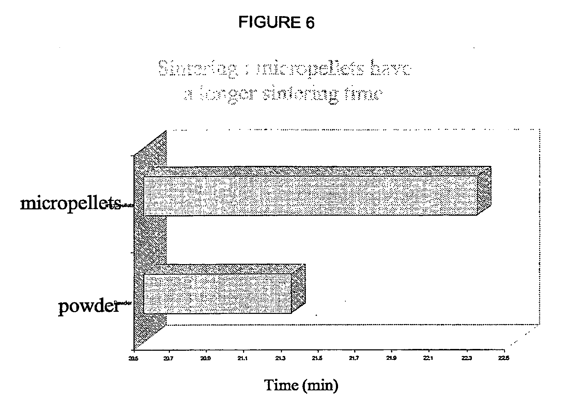

The granulometry also plays an important role in the coalescence pr ocess as well as the surface tension of the resin. It can be seen in Figure 6 that all other factors being equal, micropellets have a substantially longer sintering time than powders. In this disclosure, micropellets have sizes ranging from 200 up to 800 $\mu$m and powders have sizes ranging from 10 to 500 $\mu$m.

The densification process or bubble removal is a function of the PIAT, it also varies with the viscosity and the elastic component (G') of the resin. It improves with increasing PIAT, decreasing viscosity and decreasing elastic component G'.

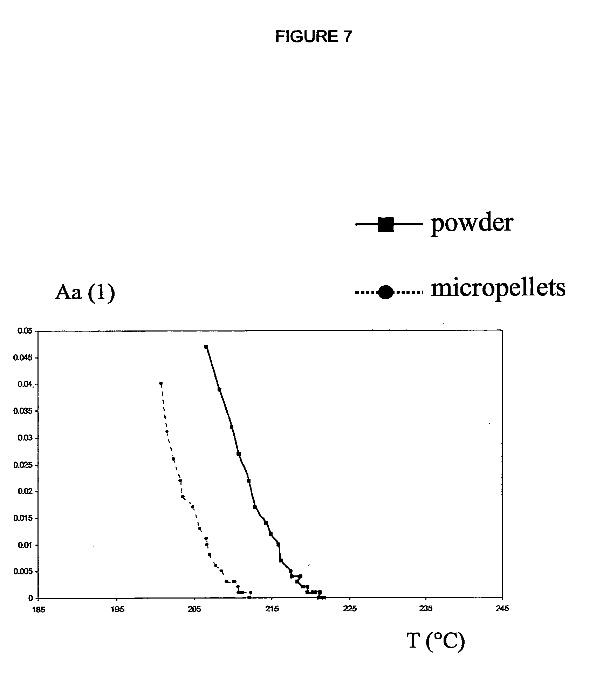

The granulometry also plays an important role in the densification process. It can be seen from Figure 7 that micropellets have a better and faster bubble removal than powders.

The crystallisation step is a f unction of the cooling rate and of the nature of the resin.

The surface microstructure is a function of the cooling rate, of the PIAT and of the nature of the resin.

All these various parameters are monitored at once with the CCD camera that takes a series of consecutive images of the evolving rotomoulding cycle and processes the information fast enough to keep up with the process being analysed or "in real time", allowing a modification of the rotomoulding parameters or of the powder granulometry in order to reach optimal conditions.

The present invention discloses the use of one or more charge -coupled device (CCD) camera(s) for characterising instantaneously and simultaneously the various parameters that influence the rotomoulding cycle and the characteristics of the rotomoulded article.

A charge-coupled device is a light sensitive integrated circuit that stores and displays the data for an image in such a way that each picture element (pixel) in the image is converted into an electrical charge, the intensity of which is related to the intensity of light striking it. CCDs can be included in both still and video cameras. In preferred embodiments of the present invention still cameras are used for optical character recognition. The captors presently used are 16 -bit CCD sensors working in black and white: they provide $2^{16}$ shades of grey.

In the high performance two-phase charge-coupled sensors preferably used in the present invention a transparent electrodes replaces one of the polysilicon gates. The transparent gate is less absorptive than polysilicon and its index of refraction provides a better match between the overlying oxide and the silicon substrate than that of the polysilicon, resulting in less reflective loss. The sensors are built with a true two-phase buried channel CCD process that is optimised for operations in multi-pinned phase (MPP) mode for low dark current. The low dark current produces the best signal -to-noise ratio when sensors are operated at low signal levels .The true two-phase architecture provides many advantages such as progressive scan, square pixels, high charge capacity and simplified drive requirements. The photon to-electron conversion ratios of, most CCDs are similar, but the size of the photosensitive area makes their performance unequal. Responsivity is a measure of the signal that each pixel can produce and is directly proportional to the pixel area. As the responsivity of the pixel increases, the same amount of signal can be collected in a shorter time or conversely, more signal can be collected during a fixed expos ure time. In addition, with low-level illumination, the image has a higher signal -to-noise-ratio and appears less grainy. Larger pixel areas also help improve the dynamic range because they hold more charge and are thus not saturated quickly with bright ob jects.

The present CCD camera system is used for characterising the behaviour of various polymers during the rotomoulding cycle. These polymers can de selected for example from polyethylene (PE), polypropylene (PP), polystyrene (PS) polyvinyl chloride (PV C), polyamide (PA), polymethyl methacrylate (PMMA), polyoxymethylene (POM), acrylonitrile -butadiene-styrene (ABS), polycarbonate (PC), polyacrylonitrile (PAN), styrene -acrylonitrile (SAN), ethylene vinyl acetate (EVA) or polyvinylidene fluoride (PVDF). Pre ferably, PE, PP and PA have been used and more preferably PE.

The present invention also discloses a method for monitoring a rotomoulding cycle that comprises the steps of:

- providing a CCD camera;
- optionally providing a light source;
- taking a series of consecutive images of the rotomoulding cycle with the CCD camera;
- recording the time at each image taken by the CCD camera;
- recording digital information at each image, said information being related to one or more rotomoulding parameters;
- sending the information to a computer that processes the information fast enough to keep up with the process being analysed,

The camera can record up to 20 images/s.

In order to retrieve the information in real time during the rotomoulding cycle, it is advantageous to use an endoscope or equivalent system wherein the endoscope's observation module is equipped with a prism made of a transparent material and mounted on a support inside the rotomoulding cavity.

The method according to the present invention may preferably also compri se the additional step of providing a feedback software, capable of adjusting the rotomoulding parameters such as PIAT, rotational speed or cooling rate in order to instantaneously optimise the cycle time, the sintering rate, the densification process and/or the properties of the final product such as for example surface microstructure, shrinkage.

**Examples.**

The CCD sensor used in the present application is a megapixel progressive scan interline CCD with on -chip circuits commercialised by Kodak.
It has the following parameters:

- architecture : interline CCD, progressive scan, non -interlaced
- pixel count: 1000(H) x 1000(V)
- pixel size : 7.4 microns(H) x 7.4 microns(V)
- photosensitive area : 7.4 mm(H) $\times$ 7.4 mm(V)
- output sensitivity : 12 microvolt/electron
- saturation signal : 40,000 electrons
- dark noise : 40 electrons rms
- dark current (typical) : < 0.5 nA/cm$^2$
- dynamic range : 60 dB
- quantum efficiency at 500, 540, 600.nm : 36%, 33%, 26%
- blooming suspension : 100X
- image lag : < 10 electrons

- smear: < 0.03%
- maximum data rate : 40 MHz/channel (2 channels)
- integrated vertical clock drivers
- integrated correlated double sampling (CDS)
- integrated electronic shutter driver

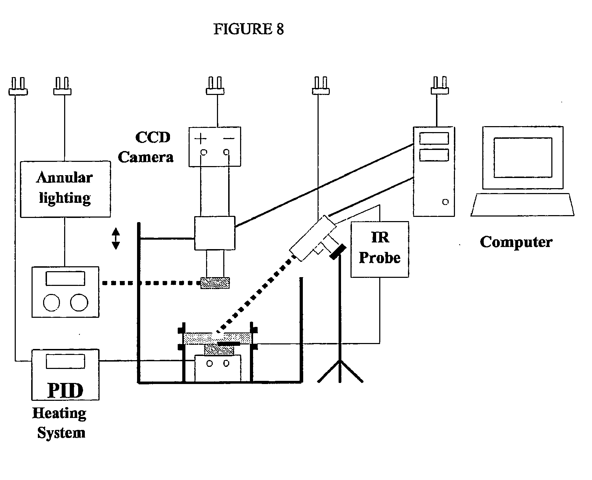

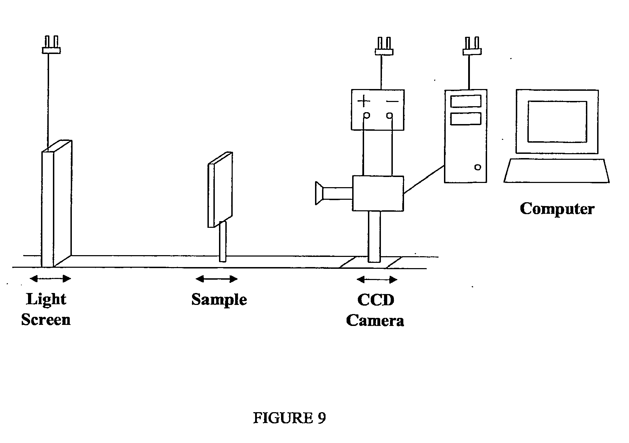

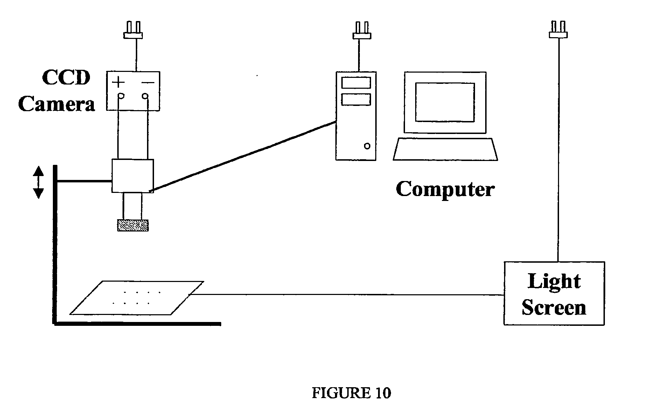

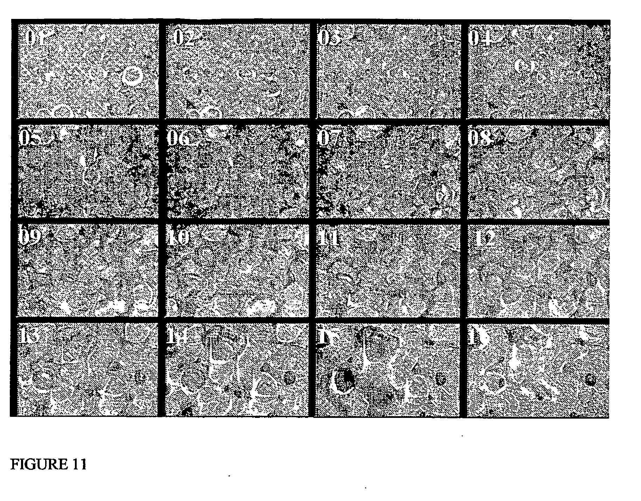

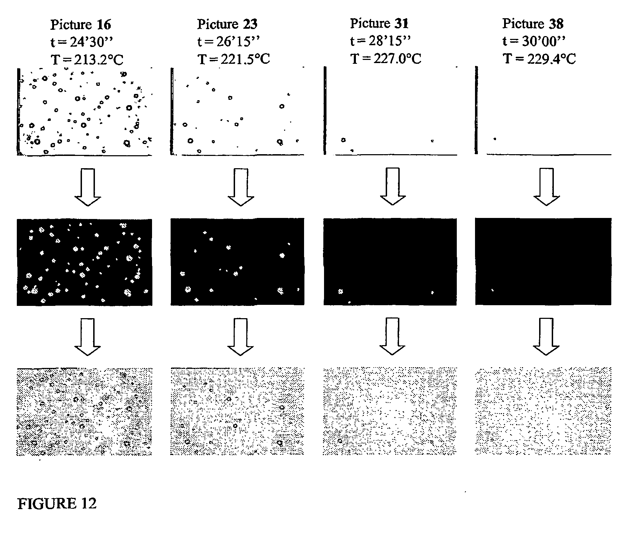

The high performance 15-bit (16 bits - 1 bit for control) CCD sensor with transparent gate electrode provides 32768 unsigned levels of grey, allows the acquisition of about 10,000 frames/s and covers a broad spectrum of from 400 to 1000 nm.
Several sample-camera set-ups have been tested in rotomoulding simulations, depending upon the parameters that we re preferably studied, as displayed in Figures 8, 9 and 10.
A typical example of sintering sequence obtained with the set -up of Figure 8 is displayed in Figure 11. The evolution of coalescence is clearly and instantaneously monitored.
A typical example of bubble removal sequence also obtained with the set -up of Figure 8 is displayed in Figure 12. The progressive disappearance of bubbles as a function of time and temperature is clearly and instantaneously followed. In addition to the visual aspect, the com puter instantaneously produces a set of parameters resulting from picture analysis. These parameters are explained in Table I. The results, derived from the example of Figure 12, are displayed in Table II.

**TABLE I.**

| Parameter | Unit | Description |
|---|---|---|
| Ex | - | picture number |
| t | min | time of picture |
| T | °C | IR temperature of sample |
| N | - | number of bubbles on the picture |
| Na | $mm^{-2}$ | number of bubbles per $mm^2$ |
| A | $\mu m^2$ | total area covered by bubbles |
| Aa | - | percentage of total picture area covered by bubbles |
| $D_{av}$ | $\mu m$ | average distance between 2 bubbles |
| S | $\mu m^2$ | average area of one bubble |
| Cr | $\mu m$ | perimeter of one bubble based on Crofton's integral |
| $D_{eq}$ | $\mu m$ | equivalent diameter of one bubble |
| L | $\mu m$ | largest side of one bubble |
| W | $\mu m$ | smallest side of one bubble |
| LO | degree | orientation of the largest side |
| WO | degree | orientation of the smallest side |

The average distance between two bubbles $D_{av}$ is defined as $D_{av} = 4 (1 - Aa)/Sv$
wherein

$$Sv = 4\pi (D_{eq}/2)^2 . Aa / ((4\pi/3) (D_{eq}/2)^3)$$

wherein the equivalent bubble diameter $D_{eq}$ is defined in terms of the average surface of one bubble S by the equation $S = 4_\Pi (D_{eq}/2)^2$.

**TABLE II.**

| Ex | t | T | N | Na | A | Aa | $D_{av}$ | S | Cr | $D_{eq}$ | W | L | WO | LO |
|---|---|---|---|---|---|---|---|---|---|---|---|---|---|---|
|  | min °C |  |  | mm$^{-2}$ | $\mu$m$^2$ | $\mu$m$^2$ | $\mu$m | $\mu$m$^2$ | $\mu$m | $\mu$m | $\mu$m | $\mu$m | ° | ° |
| 16 | 24.5 | 213.2 | 67 | 1.98 | 1813293 | 0.053 | 74.7 | 27064 | 550.6 | 174.1 | 169.8 | 193.3 | 63.9 | 81.1 |
| 17 | 24.75 | 214.8 | 55 | 1.62 | 1473558 | 0.043 | 91.9 | 26792 | 548.7 | 173.7 | 168.7 | 191.5 | 64.1 | 76.9 |
| 18 | 25 | 216.6 | 45 | 1.33 | 1198526 | 0.035 | 113.1 | 26634 | 544.8 | 173.1 | 167.7 | 190.2 | 79.6 | 80.0 |
| 22 | 26 | 220.8 | 22 | 0.65 | 577934 | 0.017 | 234.6 | 26270 | 546.3 | 172.5 | 166.9 | 191.5 | 78.5 | 92.5 |
| 26 | 27 | 223.7 | 11 | 0.32 | 272075 | 0.008 | 498.5 | 24734 | 526.1 | 167.6 | 165.0 | 183.9 | 63.8 | 96.5 |
| 30 | 28 | 226.5 | 4 | 0.12 | 89885 | 0.003 | 1509.3 | 22471 | 500.0 | 158.6 | 155.7 | 174.0 | 31.5 | 103.5 |
| 34 | 29 | 228.5 | 1 | 0.03 | 32083 | 0.001 | 4228.8 | 32083 | 636.6 | 202.1 | 208.1 | 212.7 | 54.0 | 72.0 |

A similar analysis can be carried out for granulometry. Each particle is characterised by 9 shape factors: the particle area (A), the Crofton perimeter (Cr), the equivalent diam eter ($D_{eq}$), the average width (W), the average length (L), the width orientation (WO), the length orientation (LO), the shape factor (Sh) defined by the ratio $Cr/(4\Pi\Sigma)^{0.5}$ wherein $\Sigma$ is the total surface of the picture, and the elongation (E) defined by th e ratio L/W. A powder can be completely described by about 12 pictures and the program additionally computes the average and standard deviation $\sigma$ for each of the 9 shape factors. Typical results are displayed in Table III.

**TABLE III.**

| Ex | A | Cr | $D_{eq}$ | W | L | WO | LO | Sh | E |
|---|---|---|---|---|---|---|---|---|---|
| | $\mu m^2$ | $\mu m$ | $\mu m$ | $\mu m$ | $\mu m$ | ° | ° | | |
| 1 | 40543 | 684.3 | 227.2 | 180.1 | 324.4 | 90 | 36 | 0.9 | 1.8 |
| 2 | 8109 | 187.7 | 101.6 | 90.0 | 125.8 | 0 | 36 | 0.3 | 1.4 |
| 7 | 24326 | 542.9 | 176.0 | 90.0 | 284.7 | 90 | 18 | 1.0 | 3.2 |
| 10 | 8109 | 187.7 | 101.6 | 90.0 | 125.8 | 0 | 36 | 0.3 | 1.4 |
| | | | | | | | | | |
| min | 8109 | 140.3 | 101.6 | 90.0 | 125.8 | 0 | 0 | 0.2 | 1.1 |
| max | 308124 | 2947.0 | 626.4 | 629.5 | 1053.3 | 162 | 162 | 2.8 | 4.1 |
| average | 41290 | 629.5 | 208.9 | 189.9 | 291.5 | 35.75 | 68.33 | 0.8 | 1.6 |
| $\sigma$ | 37993 | 371.3 | 94.5 | 98.0 | 134.4 | 47.03 | 44.79 | 0.4 | 0.4 |

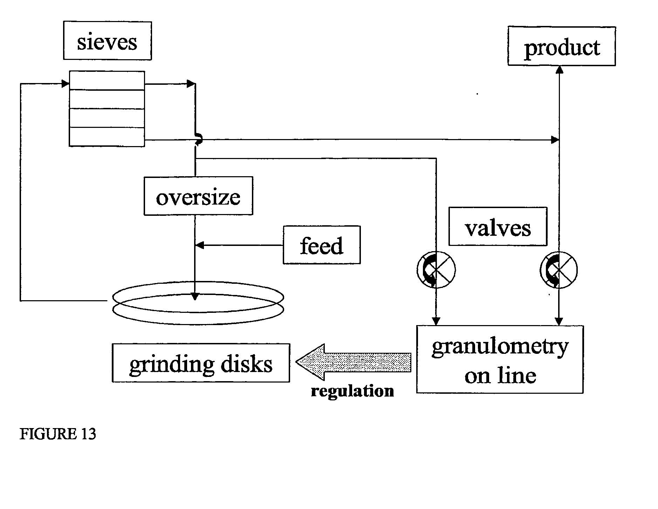

As this information is provided in real time, the grinding parameters c an be adjusted to modify the granulometry as desired, either manually or using a feedback software. A grinding set -up is represented in Figure 13.

This granulometry control can also be connected to the rotomoulding process and the particle size can be adj usted in order to optimise the rotomoulding cycle.

**Claims**

1. A method for monitoring a rotomoulding cycle that comprises the steps of:

   - providing a CCD camera;
   - optionally providing a light source;
   - taking a series of consecutive images of the rotomoulding cycle with the CCD camera;
   - recording the time at each image;
   - recording the digital information at each image, said information being related to one or more rotomoulding parameters;
   - sending the information to a computer that processes the information fast enough to keep up with the process being analysed.

2. The method according to claim 1 wherein the CCD sensor is a two -phase charge-coupled sensor with a transparent electrode.

3. The method according to claim 1 or claim 2 wherein the digital information recorded on the image is the grain size of the starting material.

4. The method according to any one of claims 1 to 3, wherein the digital information recorded is related to the melting temperature of the resin, the sintering process, the densification process, the crystallisation temperature and the surface microstructure of the finished article.

5. The method according to any one of the preceding claims, wherein the digital information recorded is sent to a feedback software in order to instantaneously adjust the production parameters.

6. Use of the CCD camera to process "in real time" and simultaneously at least all the following parameters that are related to a rotomoulding cycle, such as melting temperature, coalescence, bubble removal and crystallisation temperature, grain size and grain size distribution.

7. Use according to claim 6 to determine the optimal grain size and grain size distribution of the starting material.


**Patentansprüche**

1. Verfahren zur Überwachung eines Rotationsschmelzverfahrens, das die Schritte umfasst des :

   - Vorsehens einer CCD-Kamera ;
   - gegebenenfalls Vorsehens einer Lichtquelle ;
   - Nehmens einer Serie aufeinanderfolgender Bilder von dem Rotationsschmelzzyklus mit der CCD-Kamera ;
   - Aufzeichnens der Zeit bei jedem Bild ;
   - Aufzeichnens der digitalen Information bei jedem Bild, wobei die Information ein oder mehrere Rotationsschmelzparameter betrifft ;
   - Sendens der Information zu einem Rechner, der die Information schnell genug verarbeitet, um mit dem Verfahren, das analysiert wird, mitzuhalten.

2. Verfahren nach Anspruch 1, wobei der CCD-Sensor ein ladungsgekoppelter Zweiphasen-Sensor mit einer transparenten Elektrode ist.

3. Verfahren nach Anspruch 1 oder 2, wobei die auf dem Bild aufgezeichnete digitale Information die Korngröße des Ausgangsmaterials ist.

4. Verfahren nach einem der Ansprüche 1 bis 3, wobei die aufgezeichnete digitale Information die Schmelztemperatur des Harzes, das Sinterverfahren, das Verdichtungsverfahren, die Kristallisationstemperatur und die Oberflächen-Mikrostruktur des fertigen Artikels betrifft.

5. Verfahren nach einem der vorgenannten Ansprüche, wobei die aufgezeichnete digitale Information zu einer Feedbacksoftware gesendet wird, um die Produktionsparameter augenblicklich anzupassen.

6. Verwendung der CCD-Kamera, um "in Echtzeit" und gleichzeitig mindestens alle folgenden Parameter zu verarbeiten, die einen Rotationsschmelzzyklus betreffen, wie etwa Schmelztemperatur, Koaleszenz, Blasenentfernung und Kristallisationstemperatur, Korngröße und Korngrößenverteilung.

7. Verwendung nach Anspruch 6 zur Ermittlung der optimalen Korngröße und Korngrößenverteilung des Ausgangsmaterials.


**Revendications**

1. Procédé pour surveiller un cycle de moulage par rotation, qui comprend les étapes consistant à :

   - procurer une caméra à dispositif de transfert de charge ;
   - le cas échéant, procurer une source de lumière ;
   - prendre une série d'images successives du cycle de moulage par rotation avec la caméra à dispositif de transfert de charge ;
   - enregistrer le temps à chaque image ;
   - enregistrer les informations numériques à chaque image, lesdites informations concernant un ou plusieurs paramètres du moulage par rotation ;
   - envoyer les informations à un ordinateur qui traite les informations de manière suffisamment rapide pour suivre le rythme du processus en cours de l'analyse.

2. Procédé selon la revendication 1, dans lequel le capteur à dispositif de transfert de charge est un capteur diphasé à transfert de charge comprenant une électrode transparente.

**3.** Procédé selon la revendication 1 ou 2, dans lequel les informations numériques enregistrées sur l'image concernent la granulométrie de la matière de départ.

**4.** Procédé selon l'une quelconque des revendications 1 à 3, dans lequel les informations numériques enregistrées concernent la température de fusion de la résine, le processus de frittage, le processus de densification, la température de cristallisation et la microstructure de la surface de l'article fini.

**5.** Procédé selon l'une quelconque des revendications précédentes, dans lequel les informations numériques enregistrées sont envoyées à un logiciel de rétroaction dans le but de régler de manière instantanée les paramètres de production.

**6.** Utilisation de la caméra à dispositif de transfert de charge pour traiter « en temps réel » et de manière simultanée au moins tous les paramètres suivants qui concernent un cycle de moulage par rotation, tels que la température de fusion, la coalescence, l'élimination des bulles et la température de cristallisation, la granulométrie et la distribution granulométrique.

**7.** Utilisation selon la revendication 6, pour déterminer la granulométrie optimale et la distribution granulométrique optimale de la matière de départ.

FIGURE 1

FIGURE 2

FIGURE 3

# 1.3. Sintering characterization: temperature

FIGURE 4

FIGURE 5

## FIGURE 6

Sintering : micropellets have
a longer sintering time

micropellets

powder

Time (min)

FIGURE 7

FIGURE 8

FIGURE 9

FIGURE 10

FIGURE 11

Picture **16**
t = 24'30''
T = 213.2°C

Picture **23**
t = 26'15''
T = 221.5°C

Picture **31**
t = 28'15''
T = 227.0°C

Picture **38**
t = 30'00''
T = 229.4°C

FIGURE 12

22

sieves

product

oversize

feed

valves

grinding disks

regulation

granulometry
on line

FIGURE 13

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• US 6362270 A

**Non-patent literature cited in the description**

• **C.T. BELLEHUMEUR ; M.K. BISARIA ; J. VLA-CHOPOULOS.** *Polymer engineering and Science,* 1996, vol. 36, 2198

• **M. KONTOPOULO ; E. TAKACS ; J. VLA-CHOPOULOS.** *Rotation,* 28 January 2000